# DEMANDE DE BREVET EUROPEEN

(11) **EP 0 808 012 A1**
(43) Date de publication de la demande: **19.11.1997**
(21) Numéro de dépôt: 97104335.1
(22) Date de dépôt: 03.07.1992
(51) Int. Cl.: H02J 3/14

(54) **Procédé pour gérer la tarification de l'énergie électrique dans un réseau au sein d'un local**

(62) Demande divisionnaire de: 92401922.7
(71) Demandeur: EURO CP s.a.r.l., 94300 Vincennes (FR)
(72) Inventeur: Gilbert, Jérôme, 92300 Levallois Perret (FR)
(74) Mandataire: Pontet, Bernard

(57) **Abrégé**

L'invention concerne un procédé permettant de gérer l'énergie électrique en fonction de la tarification en vigueur dans un réseau (20) au sein d'un local.

Le procédé selon l'invention repose sur un dialogue qui s'établit automatiquement entre des appareils domestiques (201-205, 207, 210) et un appareil dit gestionnaire de l'énergie électrique (211) dont le rôle est notamment de cordonner la gestion de la tarification. Le procédé permet d'asservir le fonctionnement des appareils (201-205, 210) à l'état tarifaire en vigueur qui est connu du gestionnaire (211) par une liaison avec une unité de comptage de l'énergie électrique (200) équipant le réseau (20).

## Description

La présente invention concerne un procédé pour gérer la tarification de l'énergie électrique dans un réseau au sein d'un local, complétant efficacement les possibilités de planification des consommations qu'offrent habituellement les systèmes domotiques.

On entend par local, toute habitation indépendante ou collective et plus généralement tout immeuble, lieu de vie ou d'activité.

La gestion de la tarification consiste à utiliser des informations de changement de tarif, fournies directement ou indirectement par le distributeur d'énergie électrique, pour asservir et contrôler la mise en marche de certains appareils aux conditions économiques les plus favorables pour l'utilisateur.

La gestion de la tarification est aujourd'hui réalisée à l'aide d'un relais télécommandé au moyen d'informations directement émises par le distributeur d'énergie électrique ou commandé localement par une horloge, et placé à proximité du compteur d'énergie électrique, qui permet d'asservir le fonctionnement d'une charge à la présence du tarif dit d'heure creuse. Bien que l'exploitation du tarif "heure creuse" soit intéressante pour tous les appareils gros consommateurs d'énergie comme les lave-linge, sèche-linge, lave-vaisselle, appareils de chauffage etc.., la solution actuelle n'est généralement appliquée qu'à la production d'eau chaude sanitaire en égard à la complexité de l'installation qui résulterait de l'extension du service aux autres appareils de la maison et plus généralement du local.

L'autre voie qui a été explorée est celle de la programmation horaire du fonctionnement des appareils à des heures qui coincident avec la présence du tarif "heure creuse", cette solution coûteuse et peu commode devenant de plus difficile à mettre efficacement en pratique avec des changements de tarif que les distributeurs d'électricité souhaitent lier plus directement à la loi de l'offre de la demande en énergie.

Le but de l'invention est de remédier à ces inconvénients en proposant un procédé pour gérer la tarification de l'énergie électrique dans un réseau au sein d'un local, ce réseau comprenant des appareils pouvant communiquer entre eux de manière bidirectionnelle et des moyens déterminant la tarification de l'énergie électrique en vigueur dans ce local.

Selon l'invention, lorsqu'une information de changement de tarif apparaît au niveau des moyens déterminant la tarification de l'énergie électrique en vigueur dans le local, cette information est reprise par un appareil dit gestionnaire connecté au réseau, ce gestionnaire construisant un message contenant un élément d'information binaire indiquant si le tarif doit être considéré comme économique ou pas, ledit message étant diffusé avec un mode d'adressage qui limite sa portée logique aux appareils du local qui est associé audits moyens déterminant la tarification de l'énergie électrique en vigueur dans le local.

Ainsi, avec le procédé selon l'invention, l'utilisateur du réseau peut utiliser de façon plus rationnelle et économique le parc d'appareils connectés au réseau puisque le gestionnaire va transmettre à destination des appareils qui présentent un fonctionnement compatible avec le procédé des informations tarifaires permettant à ces appareils d'adopter le mode de fonctionnement économique qui leur est adapté. En outre, le procédé selon l'invention peut être avantageusement associé à un procédé de gestion de puissance mettant en oeuvre des opérations de délestage/relestage.

D'autres particularités et avantages de l'invention apparaîtront encore dans la description ci-après. Aux dessins annexés donnés à titre d'exemples non limitatifs:
- la figure 1 représente le schéma-bloc d'un appareil pouvant mettre en oeuvre le procédé et effectuant la gestion combinée de la puissance et de la tarification;
- la figure 2 donne un exemple de réseau domotique pouvant donner leu à la mise en oeuvre du procédé;
- la figure 3 représente les différentes étapes du procédé selon l'invention, qui incombent au gestionnaire d' énergie électrique;
- la figure 4 représente les différentes étapes du procédé selon l'invention, qui sont suivies par les appareils du réseau.

Le procédé de gestion de tarification selon l'invention s'applique à un réseau domotique 20 reliant une pluralité d'appareils domestiques communicants qui utilisent l'énergie électrique pour délivrer leurs services. Le procédé selon l'invention repose sur un dialogue qui s'établit automatiquement entre des appareils domestiques et un appareil dit gestionnaire de l'énergie électrique dont le rôle est de coordonner la gestion de la tarification et de la puissance dans une maison.

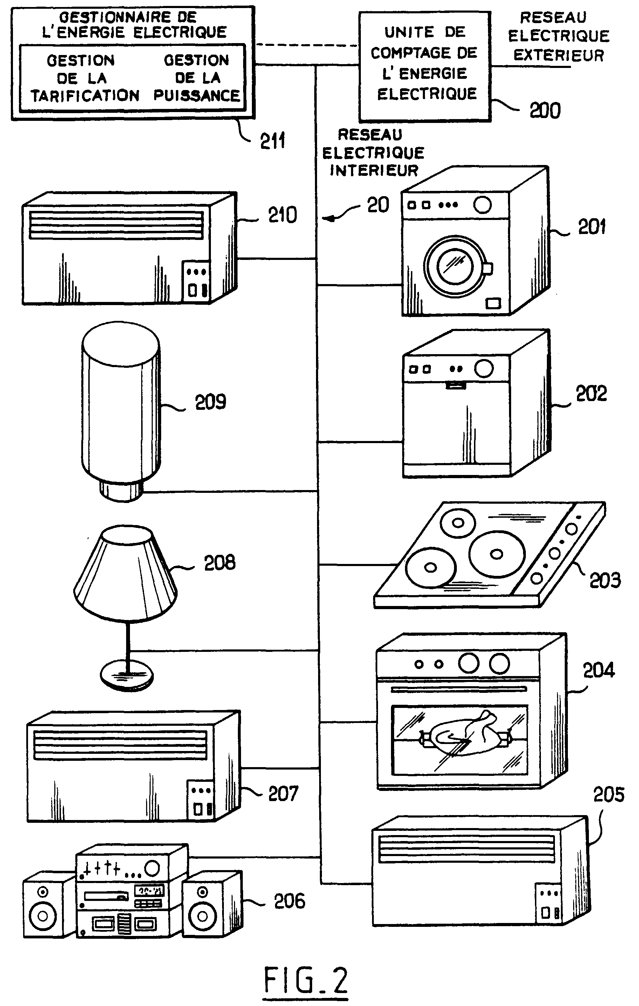

En référence à la figure 2, tous les appareils précités ont la possibilité de communiquer entre eux de manière bidirectionnelle dans un réseau domotique 20 dont le ou les supports de transmission utilisés peuvent être les courants porteurs, un câble, des moyens optiques ou radioélectriques. A titre d'exemple, à ce réseau 20 sont connectés:
- un lave-linge 201 et un lave-vaisselle 202,
- des plaques de cuisson 203 et un four 204,
- des convecteurs électriques 205, 207, 210,
- du matériel audio-vidéo 206,
- et des équipements d'éclairage 208, 209.

Le réseau 20 est également équipé d'une unité de comptage de l'énergie électrique 200 placée en interface avec un réseau électrique extérieur, et d'un appareil gestionnaire de l'énergie électrique 211 dont la structure sera décrite dans la suite. L'unité de comptage de l'énergie électrique 200 est de préférence d'un modèle électronique capable de renseigner directement le gestionnaire 211 sans intervention de l'utilisateur du réseau.

La structure de réseau la mieux adaptée pour mettre en oeuvre ce procédé est une structure multi-maître multi-esclave avec échange possible des rôles, le mode d'accès au support de transmission étant avantageusement du type à accès multiple avec écoute préalable du support et gestion des collisions.

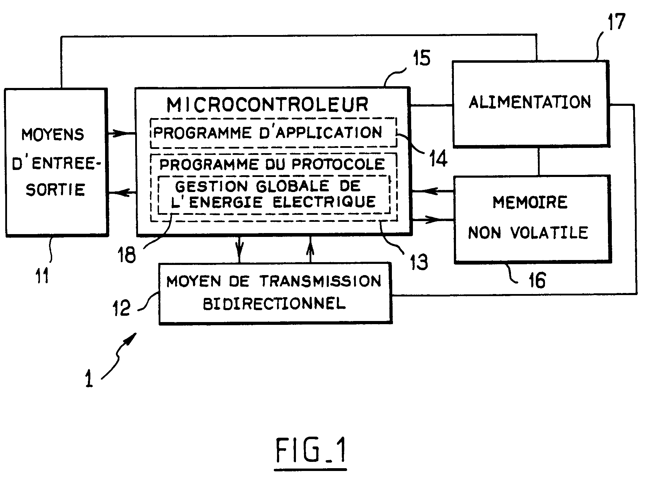

En référence à la figure 1, le procédé selon l'invention peut être mis en oeuvre dans des appareils 1 comprenant au moins:
- un micro-contrôleur 15;
- une mémoire non volatile et réinscriptible à volonté 16, par exemple une mémoire EEPROM, une mémoire RAM sauvegardée ou une mémoire FLASH;
- un moyen de transmission bidirectionnel 12 adapté au média, par exemple un modem pour courants porteurs, un émetteur-récepteur haute-fréquence ou infra-rouge, ou encore une interface pour support de transmission filaire;
- des moyens d'entrée-sortie 11 et un programme d'application 14 dépendant des fonctions offertes par chaque appareil;
- une alimentation électrique appropriée 17;
- un programme assurant un protocole de communication 13 et une gestion globale de l'énergie électrique 18, et plus généralement mettant en oeuvre un procédé d'ordre supérieur, le procédé selon l'invention en représentant un sous-ensemble.

Le gestionnaire 211, en référence à la figure 2, placé à proximité d'un compteur d'énergie 200, assure la traduction, puis la diffusion, au sein du réseau 20, d'informations tarifaires fournies à l'usager par le distributeur d'énergie électrique. Le gestionnaire 211 diffuse automatiquement un message à chaque changement d'état tarifaire et chaque appareil du réseau peut l'interroger à tout moment pour connaître le tarif en vigueur.

Le procédé selon l'invention repose sur la faculté qu'ont certains appareils électriques d'offrir a l'utilisateur la possibilité d'une mise en marche dite "ECO" (économique), qui asservit le fonctionnement de l'appareil à l'état tarifaire de l'énergie électriques. Cette solution est bien adaptée au cas des appareils électroménager simples tels que les lave-linge, lave-vaisselle, sèche-linge etc...

Le message que le gestionnaire de tarification envoie automatiquement lors d'un changement de tarif ou sur demande d'un appareil, contient un élément d'information binaire élaboré par le gestionnaire et qui indique dans l'ensemble du réseau si le tarif en vigueur est économique ou non.

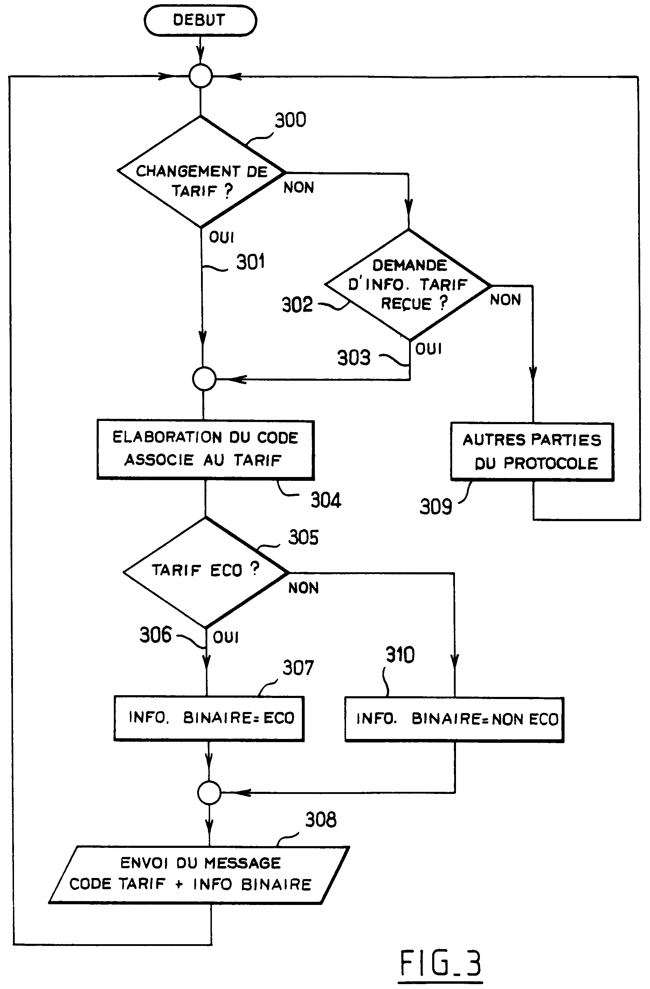

Les étapes du procédé selon l'invention, qui incombent au gestionnaire, sont les suivantes en référence à la figure 3:
- un test de détection 300 de changement de tarif au niveau des moyens déterminant la tarification de l'énergie électrique en vigueur dans le local, par exemple, l'unité de comptage d'énergie électrique 200. S'il n'y a pas de changement, un test est effectué pour détecter une demande d'information tarifaire 302 émanant d'un appareil du réseau; si aucune demande n'est reçue, alors les autres parties du protocole sont explorées 309 avant de revenir au premier test 300;
- dans le cas d'une réponse positive 301, 303 aux deux tests précédents 300, 302, un code représentatif du tarif en vigueur est élaboré 304;
- un test 305 permettant de déterminer si le tarif en vigueur peut être considéré comme économique ou pas 305; ce test n'a d'intérêt qui si la tarification possède au moins deux niveaux; si le tarif est économique 306, alors l'élément d'information binaire prend la valeur "ECO" 307, sinon il prend la valeur "NON ECO" 310;
- un envoi d'un message d'information tarifaire 308 avec un mode d'adressage qui limite la portée logique aux appareils du local qui correspond au gestionnaire, ce message contenant l'élément d'information binaire.

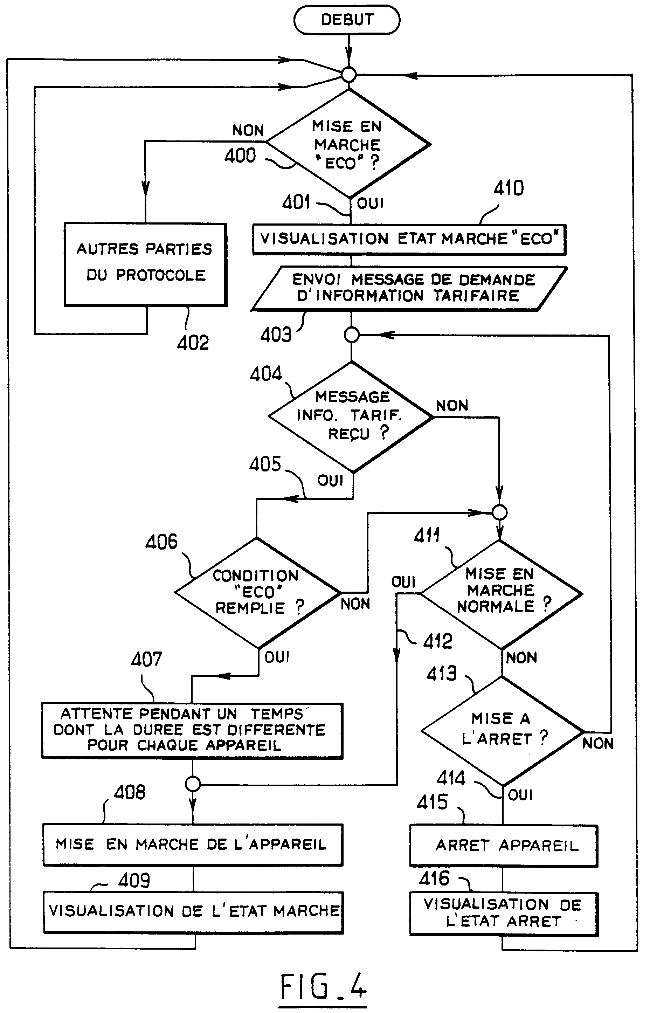

Les étapes du procédé selon l'invention, qui concernent les appareils capables d'exploiter des informations tarifaires, sont les suivantes, en référence à la figure 4:
- un test 400 de l'état d'un bouton MARCHE "ECO" 400; si le résultat du texte est négatif, les autres étapes du protocole de communication et/ou de gestion dont le procédé selon l'invention est un sous-ensemble, et plus généralement de tout procédé d'ordre supérieur dans lequel le procédé selon l'invention s'inscrit, sont explorées 402; si une mise en MARCHE "ECO" est demandée;
- une visualisation 410 de l'état de MARCHE "ECO";
- un envoi 403 d'un message de demande d'information tarifaire en diffusion générale avec un mode d'adressage qui limite la portée logique du message aux appareils dotés de la même adresse de réseau;
- une attente 404 de réception d'un message d'information tarifaire en provenance du gestionnaire du local; si un tel message n'est pas reçu, le procédé teste 411 l'état du bouton de mise en marche normale; si la mise en marche normale est demandée 412, alors l'appareil est mis en marche immédiatement 408 et cet état est visualisé 409, puis les autres étapes du protocole sont explorées 402; si la mise en marche normale n'est pas demandée, l'étape suivante est le test 413 d'un bouton de mise à l'arrêt; si le résultat du test est positif 414, l'appareil est arrêté 415, cet état est visualisé 416, puis les autres étapes du protocole sont explorées 402; si le résultat du test 413 est négatif, le procédé revient à l'étape d'attente du message d'information tarifaire 404;
- si un message d'information tarifaire est reçu 405, le contenu de ce message est examiné pour savoir si les conditions autorisant le mise en marche sont remplies 406; si ce n'est pas le cas, le procédé revient à l'étape de test 411 du bouton de mise en marche normale, si les conditions sont remplies, une période d'attente don la durée est différente pour chaque appareil a pour but d'étaler la pointe de courant qui, sans cette précaution, dans certains cas pourrait provoquer une disjonction du réseau électrique intérieur;
- et un retour aux autres parties du protocole.

Il faut noter que le procédé d'ordre supérieur dans lequel s'inscrit le procédé selon l'invention peut inclure d'autres possibilités de mise en marche ou de mise à l'arrêt d'un appareil.

En outre, on peut prévoir une temporisation initiée dès l'instant où l'appareil n'a pas reçu de réponse à une demande d'information tarifaire et permettant ainsi de sortir automatiquement du mode d'attente dans lequel les tests de mise en marche normale 411 et de mise à l'arrêt 413 ne sont pas satisfaits, notamment en cas de disparition du gestionnaire ou de dysfonctionnement du réseau, et d'atteindre directement l'étape 415 d'arrêt de l'appareil.

Il est à noter que certains appareils, par exemple des appareils de chauffage, de congélation ou autres, peuvent exploiter l'information de disparition des conditions tarifaires "ECO" pour arrêter leur fonctionnement.

Selon un mode avantageux de mise en oeuvre du procédé selon l'invention, il est proposé à l'utilisateur deux types de départ d'un cycle fonctionnel d'un appareil:
- un départ immédiat, où la préférence est donnée au temps,
- un départ "heure creuse" où la préférence est donnée aux économies d'énergie.

Ceci garantit à l'utilisateur un départ de cycle aux meilleures conditions tarifaires, ce que ne permet pas d'obtenir à coup sûr un simple départ différé.

Toute action sur un appareil dont le fonctionnement est compatible avec ce mode de réalisation de l'invention: mise en marche immédiate ou mise en marche "heure creuse" provoque une réaction instantanée de dispositifs locaux de faible puissance: par exemple, voyants, afficheurs, ventilateurs, à des fins d'ergonomie par nécessité d'une réaction immédiate de l'appareil aux sollicitations de l'utilisateur; si un départ "heure creuse" a été demandé, l'utilisateur reçoit en retour une information d'"attente heure creuse", sous la forme, par exemple, du clignotement d'un voyant "départ heure creuse" ou par tout autre moyen équivalent. Lorsque le départ devient effectif à la réception d'un message de tarif "ECO", le voyant cesse de clignoter pour rester allumé en permanence jusqu'à l'arrêt de l'appareil.

Les messages d'information tarifaire émis par le gestionnaire contiennent une information binaire indiquant si l'événement tarifaire peut être classé dans la catégorie "tarif normal" ou tarif économique "ECO".

Bien entendu, l'invention n'est pas limitée aux exemples qui viennent d'être décrits et de nombreux aménagements peuvent être apportés à ces exemples sans sortir du cadre de l'invention.

Ainsi, on peut envisager pour l'acheminement des informations tarifaires au sein du réseau tout type de support, filaire ou non, avec ou sans courant porteur. De plus, l'information de changement tarifaire peut être fournie au gestionnaire par l'observation de l'état d'un dispositif de commutation commandé aussi bien à distance par courant porteur sur le réseau extérieur au local par le distributeur d'énergie électrique, ou localement par une horloge.

D'autre part, la période d'attente qui précède la mise en marche effective de l'appareil peut éventuellement être omise dans le cas où le message d'information tarifaire consécutif à la demande de marche économique "ECO" satisfait d'emblée la condition ECO.

De plus, les conditions tarifaires ECO étant le plus souvent pratiquées la nuit, la période d'attente peut avoir une durée qui tient compte de la nature du service qu'apporte l'appareil. Par exemple, on pourra préférer mettre en marche effective un lave-vaisselle peu après l'apparition des conditions tarifaires ECO pour que la vaisselle ait le temps de sécher, d'autres appareils comme les lave-linges ou les sèche-linges pourront avantageusement attendre un temps plus long avant leur mise en marche effective pour éviter le froissage du linge dû à un long séjour dans la machine après la fin du cycle.

## Revendications

1. Procédé pour gérer la tarification de l'énergie électrique dans un réseau (20) au sein d'un local, ledit réseau (20) comprenant des appareils (201-205, 207, 209) pouvant communiquer entre eux de manière bidirectionnelle, des moyens (200) pour déterminer la tarification de l'énergie électrique en vigueur dans ce local, et un appareil dit gestionnaire (211) connecté audit réseau (20), caractérisé en ce qu'il comprend en outre une étape d'élaboration par l'appareil gestionnaire (211) d'un élément d'information binaire indiquant si le tarif en vigueur doit être considéré comme économique ou pas à partir des informations tarifaires fournies par les moyens de détermination (200) et selon des conditions tarifaires associées à l'état de marche économique déterminées au niveau dudit gestionnaire (211), cet élément d'information binaire étant ensuite inclus dans un message d'information tarifaire diffusé sur le réseau (20) avec un mode d'adressage qui limite sa portée logique aux appareils du local.

2. Procédé selon la revendication 1, caractérisé en ce qu'il comprend, au niveau du gestionnaire de l'énergie électrique (211), les étapes suivantes:
- un test de détection (300) de changement de tarif au niveau des moyens pour déterminer la tarification (200), suivi, s'il n'y a pas de changement, d'un test effectué pour détecter une demande d'information tarifaire (302) émanant d'un appareil du réseau; si aucune demande n'est reçue, alors les autres parties du protocole sont explorées (309) avant de revenir au premier test (300);
- un test (305) permettant de déterminer si le tarif en vigueur peut être considéré comme économique ou pas (305); si le tarif est économique (306), alors l'élément d'information binaire prend la valeur "ECO" (307), sinon il prend la valeur "NON ECO" (310);
- un envoi d'un message d'information tarifaire (308) avec un mode d'adressage qui limite la portée logique aux appareils du local qui correspond au gestionnaire (200), ce message contenant l'élément d'information binaire.

3. Procédé selon la revendication 2, caractérisé en ce qu'il comprend, au niveau de chaque appareil du réseau pouvant exploiter des informations tarifaires, les étapes suivantes:
- un test (400) de l'état d'un bouton MARCHE "ECO" associé audit appareil, suivi, si le résultat du test est négatif, de l'exécution (402) d'étapes d'un procédé d'ordre supérieur dont le procédé selon l'invention est un sous-ensemble, notamment d'un protocole de communication et/ou de gestion, et si une mise en MARCHE "ECO" est demandée;
- une visualisation (410) dudit état de MARCHE "ECO";
- un envoi (403) d'un message de demande d'information tarifaire en diffusion générale avec mode d'adressage qui limite la portée logique du message aux appareils dotés de la même adresse de réseau;
- une attente (404) de réception d'un message d'information tarifaire en provenance du gestionnaire (211) du local, suivie, si un tel message n'est pas reçu, d'un test (411) de l'état du bouton de mise en marche normale et d'un bouton de mise à l'arrêt (414).

4. Procédé selon la revendication 3, caractérisé en ce que, à l'issue dudit test d'état (411), si la mise en marche normale est demandée (412), alors l'appareil est mis en marche immédiatement (408) et cet état est visualisé (409), puis les autres étapes du procédé d'ordre supérieur sont explorées (402); si la mise en marche normal n'est pas demandée, un test (413) d'un bouton de mise à l'arrêt est effectué.

5. Procédé selon la revendication 4, caractérisé en ce que, si le résultat du test (413) du bouton de mise à l'arrêt est positif (414), l'appareil est arrêté (415), cet état est visualisé (416), puis les autres étapes du procédé d'ordre supérieur sont explorées (402); si le résultat du test (413) est négatif, le procédé revient à l'étape d'attente du message d'information tarifaire (404).

6. Procédé selon la revendication 5, caractérisé en ce que, si un message d'information tarifaire est reçu (405), le contenu de ce message est examiné pour savoir si les conditions autorisant la mise en marche sont remplies (406), et dans le cas contraire, une étape de test (411) du bouton de mise en marche normale et une étape de test (413) du bouton de mise à l'arrêt sont de nouveau effectuées.

7. Procédé selon la revendication 6, caractérisé en ce qui, si le test (406) déterminant si le message d'information tarifaire reçu contient une information de "tarif économique" est satisfait, une période d'attente (407), dont la durée est différente pour chaque appareil, est effectuée avant la mise en marche effective dudit appareil.

8. Procédé selon l'une quelconque des revendications précédentes, caractérisé en ce qu'il peut être combiné à un procédé de gestion de puissance pour permettre une gestion globale de l'énergie électrique sur un réseau au sein d'un local.
